# EUROPÄISCHE PATENTSCHRIFT

(11) **EP 2 669 169 B1**
(45) Veröffentlichungstag und Bekanntmachung des Hinweises auf die Patenterteilung: **13.01.2016**
(21) Anmeldenummer: 13004269.0
(22) Anmeldetag: 20.08.2009
(51) Int. Cl.: B62M 9/135

(54) **Kettenschaltung für ein Fahrrad**
Gear changer for a bicycle
Embrayage à chaîne pour un vélo

(30) Priorität: 29.09.2008 DE 102008049360
(43) Veröffentlichungstag der Anmeldung: 04.12.2013
(62) Teilanmeldung aus: 09010714.5
(73) Patentinhaber: SRAM Deutschland GmbH, 97424 Schweinfurt (DE)
(72) Erfinder: Auer, Marcus, 97525 Schwebheim (DE)

(56) Entgegenhaltungen:
- EP-A2- 1 447 317
- EP-A2- 1 997 725
- DE-B- 1 225 514

## Beschreibung

Die Erfindung betrifft einen Umwerfer als Bestandteil einer Kettenschaltung für ein Fahrrad zur Befestigung an einem Sitzrohr eines Rahmens, umfassend einen Grundkörper, eine Klemmschelle mit einer Schellenschraube, einen ersten angefederten Parallelogrammhebel und einen zweiten Parallelogrammhebel sowie eine Kettenführung, wobei der Grundkörper den oberen Abschluss des Umwerfers am Sitzrohr bildet und die Parallelogrammhebel nach unten weisend angeordnet sind.

Gemäß der Europäischen Patentanmeldung EP 1 447 317 A1, welche die Preämbel des Anspruchs 1 offenbart, ist ein Umwerfer einer Kettenschaltung veröffentlicht worden, bestehend aus einem Grundkörper, zwei hängend angeordneten Parallelogrammhebeln, von denen der außen liegende mit einem Betätigungshebel einteilig verbunden ist, einer Kettenführung sowie einer Feder, die die Kettenführung gegen den innen liegenden Parallelogrammhebel anfedert. Der Grundkörper weist zu seiner Befestigung einen Arm auf, der das Sitzrohr zusammen mit einem Schwenkarm umschließt und mit diesem verschraubbar ist, wobei der Schwenkarm mit dem Grundkörper über ein Scharnier verbunden ist.

Die EP 1 997 725 A2 offenbart einen umwerfer gemäß dem Artikel 54(3) EPÜ.

Gemäß dem vorliegenden Erfindungsvorschlag werden möglichst viele Funktionen auf den Grundkörper konzentriert, was in erster Linie die Befestigung des Grundkörpers am Sitzrohr betrifft, in zweiter Linie aber auch die Lage der Feder berücksichtigt. Der Grundkörper weist ähnlich dem Arm des obengenannten Stand der Technik eine konkave Zylinderfläche auf, die sich an die Form des Sitzrohres anschmiegt und so dem Grundkörper eine einstellbare Position verleiht, in der er nur noch befestigt zu werden braucht. Die hierzu benötigte Klemmschelle ist mit einem ersten Ende am Grundkörper befestigt, umschlingt das Sitzrohr und wird gegenüber an seinem Schellenende mittels einer Schellenschraube am Grundkörper verspannt. Das Schellenende weist ein Gewindeteil auf, in das die Schellenschraube eingedreht wird, deren Kopf sich an einem Gegenhalter mit einer Bohrung abstützt und das Gewindeteil mit dem Schellenende am Grundkörper verspannt. Der Gegenhalter ist am Grundkörper derart angeordnet, dass sich für die Schellenschraube eine Montagerichtung ergibt, die durch ein Fenster am zweiten Parallelogrammhebel verläuft. Will man den Umwerfer am Sitzrohr verspannen, so muss man mit einem Werkzeug durch das Fenster des zweiten Parallelogrammhebels bis zum Kopf der Schellenschraube vordringen, um diesen zu verdrehen und die Klemmschelle zu spannen. Das Fenster im zweiten Parallelogrammhebel kommt dadurch zustande, dass dieser aus Gründen einer soliden Lagerung zwei Arme aufweist, die mit dem Grundkörper eine breite erste Lagerstelle bilden. Die zweite Lagerstelle befindet sich zwischen dem zweiten Parallelogrammhebel und der Kettenführung. Der Vorteil der Fensteranordnung liegt sowohl in der optischen Darstellung des Umwerfers als auch in der geschützten Position der Spannelemente.

Der Grundkörper weist ferner eine tangential zum Durchmesser des Sitzrohres verlaufende Rampe auf, auf der das Gewindeteil mit dem Schellenende beim Spannen der Klemmschelle aufgleiten kann. Die aus Federbandstahl hergestellte Klemmschelle umschlingt am Schellenende das Gewindeteil und endet in einem nach hinten weisendeN Lappen, der an der Klemmschelle vernietet, verschraubt, gefügt oder verschweißt wird. Der Lappen kann entweder innerhalb oder außerhalb der Klemmschelle verlaufen, wobei die innen liegende Variante optische Vorteile mit sich bringt.

Der Vorschlag dieser Anmeldung bezieht sich ferner auf die Lage der Feder, die den ersten Parallelogrammhebel gegen den Grundkörper anfedert. Dieser erste Parallelogrammhebel ist unterhalb des zweiten Parallelogrammhebels angeordnet. Die Feder am Grundkörper ist koaxial zwischen einem ersten Arm und einem zweiten Arm des ersten Parallelogrammhebels angeordnet, mit denen er am Grundkörper schwenkbar gelagert ist und eine dritte Lagerstelle bildet. Mit dem ersten Arm ist ein Betätigungshebel verbunden, an dem ein Zugseil zur Betätigung des Umwerfers befestigt werden kann. Die Arme werden mit der Basis am Grundkörper vorzugsweise durch einen Bolzen verbunden, der gleichzeitig die Führung für die koaxial zu diesem angeordnete Feder darstellt, die als Spiralfeder ausgeführt ist und deren Enden nach auswärts abgebogen sind, wobei sich das eine Ende an der Basis des Grundkörpers abstützt und das andere Ende sich mit Vorspannung am ersten Parallelogrammhebel anlegt. Durch die Anordnung der Feder ergibt sich eine große Stützweite, die aus Gründen der Symmetrie auch an einer vierten Lagerstelle zu finden ist, die der erste Parallelogrammhebel mit der Kettenführung bildet. Während die dritte Lagerstelle durch einen Bolzen gebildet wird, besteht die vierte Lagerstelle aus zwei separaten Lagerungen, die wegen ihrer großen Entfernung voneinander vorzugsweise nicht mit einem Bolzen in Verbindung stehen. Der Vorteil dieser Anordnung liegt in der stabilen Führung der Kette, wenn hohe Schaltkräfte auf den Umwerfer vor allem im Gelände oder am Berg wirken. Es hat sich ferner als zweckmäßig erwiesen, dass der erste Parallelogrammhebel und der zweite Parallelogrammhebel hängend, also nach unten weisend am Grundkörper angeordnet sind. Hierdurch liegen die wichtigsten Funktionsteile des Umwerfers optimal geschützt vor Verschmutzung und Zerstörung durch äußere Gewaltanwendung. Die Zugänglichkeit der Schellenschraube ist nicht durch die Kettenführung eingeschränkt.

Die Erfindung hat es sich zur Aufgabe gemacht, einen Umwerfer als Bestandteil einer Kettenschaltung zu schaffen, dessen Funktionsteile vor Verschmutzung und Zerstörung optimal geschützt sind und dessen Grundkörper durch eine Klemmschelle an einem Sitzrohr mittels einer unauffällig angeordneten Klemmschraube befestigt ist, wobei die Befestigungsmittel uneingeschränkt zugänglich sind.

Die Lösung der Aufgabe ist in den kennzeichnenden Teilen des Hauptanspruches und des nebengeordneten Anspruchs beschrieben. Ausgestaltungen sind den jeweiligen Unteransprüchen zu entnehmen.

Anhand mehrerer perspektivischer Zeichnungen wird ein Umwerfer einer Kettenschaltung eines Fahrrades erläutert. Es zeigen:
- Fig. 1: einen Grundkörper mit einer Klemmschelle;
- Fig. 2: einen ersten Parallelogrammhebel mit einer Feder an einer dritten Lagerstelle;
- Fig. 3: eine Kettenführung mit einer zweiten und einer vierten Lagerstelle;
- Fig. 4: den Umwerfer mit der Klemmschelle, die durch eine Schellenschraube in einer Montagerichtung spannbar ist;
- Fig.5: den Grundkörper mit dem zweiten Parallelogrammhebel, der zwischen der ersten und der zweiten Lagerstelle ein Fenster aufweist.

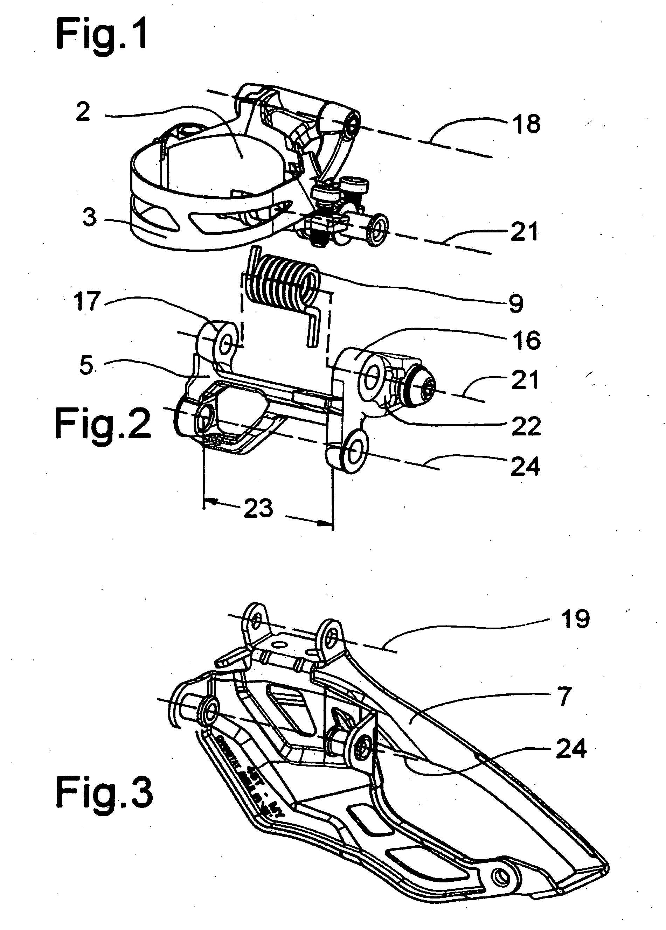

Gemäß der Fig. 1 wird ein Grundkörper 2 eines Umwerfers 1 mit einer Klemmschelle 3 in montiertem Zustand dargestellt. Es sind eine erste Lagerstelle 18 für die gelenkige Lagerung eines zweiten Parallelogrammhebels 6 und eine dritte Lagerstelle 21 für die gelenkige Lagerung eines ersten Parallelogrammhebels 5 zu erkennen, die Teile eines Parallelogramms zum Umlegen einer Kette auf verschieden große Zahnkränze an einem Tretlager des Fahrrades sind.

Die Fig. 2 zeigt den ersten Parallelogrammhebel 5 mit einem ersten Arm 16 und einem zweiten Arm 17 sowie mit einem Betätigungshebel 22 für die Montage eines Zugseils, der mit dem ersten Arm 16 verbunden ist. Der erste Arm 16 und der zweite Arm 17 weisen an ihren Enden Bohrungen für die dritte Lagerstelle 21 auf, durch die ein hier nicht dargestellter Bolzen montierbar ist, der gleichzeitig als Führung einer Feder 9 dient. Ein ausgestelltes Ende der Feder 9 stützt sich am Grundkörper 2 und das andere Ende am ersten Parallelogrammhebel 5 ab, um eine Vorspannung des ersten Parallelogrammhebels 5 zum Grundkörper 2 zu erzeugen. Der erste Parallelogrammhebel 5 weist schließlich noch zwei Bohrungen für eine vierte Lagerstelle 24 auf, an der die Kettenführung 7 gelenkig gelagert ist, wobei die Bohrungen zur Erzeugung einer großen Stützweite 23 ähnlich weit voneinander entfernt sind, wie der erste Arm 16 vom zweiten Arm 17 für die dritte Lagerstelle 21.

Aus der Fig. 3 geht eine Kettenführung 7 hervor, die eine gemeinsame zweite Lagerstelle 19 mit dem zweiten Parallelogrammhebel 6 und die bereits erwähnte gemeinsame vierte Lagerstelle 24 mit dem ersten Parallelogrammhebel 5 zur Vervollständigung des Parallelogramms am Umwerfer 1 aufweist.

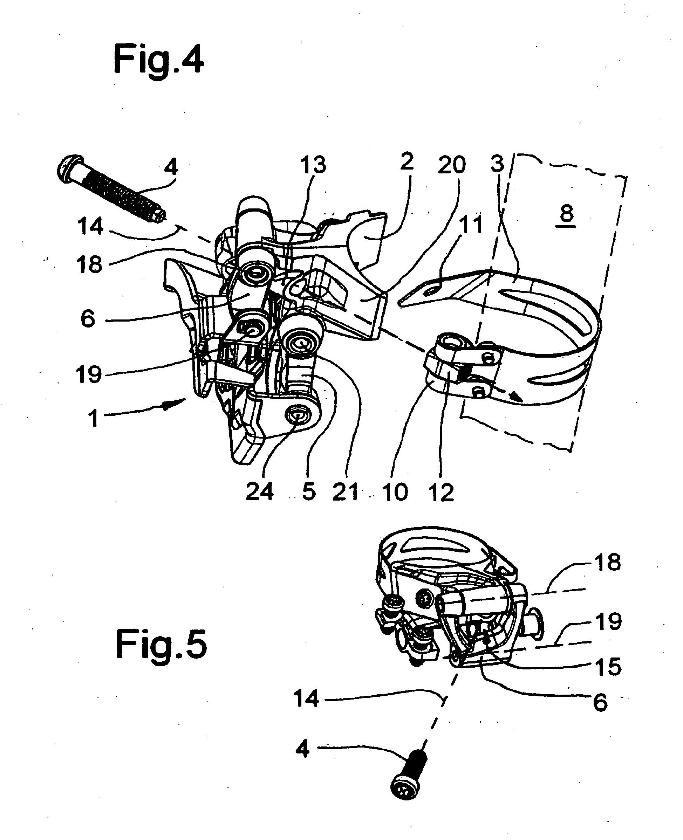

Die Fig. 4 stellt den Umwerfer 1 und die Klemmschelle 3 in demontierter Form dar. Die Klemmschelle 3 weist ein erstes Ende 11 auf, mit dem sie am Grundkörper 2 befestigt wird. An einem Schellenende 10 auf der anderen Seite der Klemmschelle 3 ist ein Gewindeteil 12 angeordnet, in das die Schellenschraube 4 eindrehbar ist, die einen Gegenhalter 13 durchragt, der der Schellenschraube 4 eine bestimmte Montagerichtung 14 vorgibt. Hierbei wird das Schellenende 10 über eine Rampe 20 in der Montagerichtung 14 herangezogen, bis der Grundkörper 2 am Sitzrohr 8 festgespannt ist.

Es wird gezeigt, wie der Umwerfer 1 mit der Klemmschelle 3 mittels einer Schellenschraube 4 an einem Sitzrohr 8 befestigt werden kann, nämlich durch
- die Fixierung eines ersten Endes 11 der Klemmschelle 3 am Grundkörper 2;
- Anlegen des Grundkörpers 2 am Sitzrohr 8;
- Umschlingung des Sitzrohres 8 mit der Klemmschelle 3;
- Einführen der Schellenschraube 4 durch das Fenster 15 und den Gegenhalter 13 in das Gewindeteil 12 entlang der Montagerichtung 14;
- Festziehen der Schellenschraube 4.

Schließlich zeigt die Fig. 5 den Grundkörper 2 mit dem zweiten Parallelogrammhebel 6, der mit seinen beiden Armen ein Fenster 15 bildet, durch welches sich die Montagerichtung 14 erstreckt und die Schellenschraube 4 eingelegt und festgedreht wird. Vorteile sind darin zu sehen, dass vom Umwerfer auf der dem Tretlager gegenüberliegenden Fahrradseite kein Bauraum beansprucht wird und dass ferner bewegliche Funktionsteile vor Schmutz und äußerer Gewalteinwirkung geschützt sind.

### Bezugszeichenliste

1. Umwerfer
2. Grundkörper
3. Klemmschelle
4. Schellenschraube
5. erster Parallelogrammhebel
6. zweiter Parallelogrammhebel
7. Kettenführung
8. Sitzrohr
9. Feder
10. Schellenende
11. erstes Ende
12. Gewindeteil
13. Gegenhalter
14. Montagerichtung
15. Fenster
16. erster Arm
17. zweiter Arm
18. erste Lagerstelle
19. zweite Lagerstelle
20. Rampe
21. dritte Lagerstelle
22. Betätigungshebel
23. Stützweite
24. vierte Lagerstelle

## Patentansprüche

1. Umwerfer (1) als Bestandteil einer Kettenschaltung für ein Fahrrad zur Befestigung an einem Sitzrohr (8) eines Rahmens umfassend
einen Grundkörper (2),
eine Klemmschelle (3) mit einer Schellenschraube (4),
einen ersten angefederten Parallelogrammhebel (5) und einen zweiten Parallelogrammhebel (6) sowie
eine Kettenführung (7),
wobei eine Feder (9) den ersten Parallelogrammhebel (5) gegen den Grundkörper (2) anfedert, und der erste angefederte Parallelogrammhebel (5) unterhalb des zweiten Parallelogrammhebels (6) angeordnet ist; **dadurch gekennzeichnet, dass**
diese Feder (9) am Grundkörper (2) koaxial zu einer dritten Lagerstelle (21) zwischen einem ersten Arm (16) und einem zweiten Arm (17) des ersten Parallelogrammhebels (5) angeordnet ist;
der Grundkörper (2) den oberen Abschluss des Umwerfers (1) am Sitzrohr (8) bildet, und
der erste Parallelogrammhebel (5) mit einem Betätigungshebel (22) einteilig verbunden ist, wobei der Betätigungshebel (22) mit dem ersten Arm (16) einteilig ausgebildet ist.

2. Umwerfer nach Anspruch 1,
**dadurch gekennzeichnet, dass**
der erste Arm (16) vom zweiten Arm (17) am ersten Parallelogrammhebel (5) durch die Aufnahme der Feder (9) retativ weit entfernt ist und dadurch eine entsprechend stabile Stützweite (11) an der dritten Lagerstelle (21) bildet.

3. Umwerfer nach Anspruch 1 oder 2,
**dadurch gekennzeichnet, dass**
der erste Parallelogrammhebel (5) und der zweite Parallelogrammhebel (6) hängend, also nach unten weisend, am Grundkörper (2) angeordnet sind.

## Claims

1. Front derailleur (1) as a constituent part of a derailleur system for a bicycle for fastening to a seat tube (8) of a frame, comprising
a main body (2),
a clamping clip (3) with a clamp screw (4),
a first sprung parallelogram lever (5) and a second parallelogram lever (6), and
a chain guide (7),
a spring (9) suspending the first parallelogram lever (5) against the main body (2), and the first sprung parallelogram lever (5) being arranged below the second parallelogram lever (6);
**characterized in that**
the said spring (9) is arranged on the main body (2) coaxially with respect to a third bearing point (21) between a first arm (16) and a second arm (17) of the first parallelogram lever (5);
the main body (2) forms the upper termination of the front derailleur (1) on the seat tube (8); and
the first parallelogram lever (5) is connected in one piece to an actuating lever (22), the actuating lever (22) being configured in one piece with the first arm (16).

2. Front derailleur according to Claim 1,
**characterized in that**
the first arm (16) is relatively far away from the second arm (17) on the first parallelogram lever (5) as a result of the accommodation of the spring (9) and, as a result, forms a correspondingly stable support width (11) at the third bearing point (21).

3. Front derailleur according to Claim 1 or 2,
**characterized in that**
the first parallelogram lever (5) and the second parallelogram lever (6) are arranged on the main body (2) such that they are suspended, that is to say point downwards.

## Revendications

1. Dérailleur (1) faisant partie d'un changement de vitesse à chaînes pour une bicyclette, pour la fixation sur un tube de siège (8) d'un cadre, comprenant :
un corps de base (2),
un collier de serrage (3) avec une vis de collier (4),
un premier levier à parallélogramme (5) sollicité par ressort et un deuxième levier à parallélogramme (6) ainsi que
un guide de chaîne (7),
un ressort (9) sollicitant par ressort le premier levier à parallélogramme (5) contre le corps de base (2) et le premier levier à parallélogramme (5) sollicité par ressort étant disposé sous le deuxième levier à parallélogramme (6) ;
**caractérisé en ce que**
le ressort (9) est disposé au niveau du corps de base (2) axialement à un troisième emplacement de palier (21) entre un premier bras (16) et un deuxième bras (17) du premier levier à parallélogramme (5) ;
le corps de base (2) forme la terminaison supérieure du dérailleur (1) au niveau du tube de siège (8) ; et
le premier levier à parallélogramme (5) est connecté d'une seule pièce à un levier d'actionnement (22), le levier d'actionnement (22) étant réalisé d'une seule pièce avec le premier bras (16).

2. Dérailleur selon la revendication 1,
**caractérisé en ce que**
le premier bras (16) est relativement beaucoup éloigné du deuxième bras (17) au niveau du premier levier à parallélogramme (5) par le logement de ressort (9) et forme de ce fait au niveau du troisième point de palier (21) une portée stable de manière correspondante (11).

3. Dérailleur selon la revendication 1 ou 2,
**caractérisé en ce que**
le premier levier à parallélogramme (5) et le deuxième levier à parallélogramme (6) sont disposés de manière suspendue, c'est-à-dire orientée vers le bas, sur le corps de base (2).
